# EUROPÄISCHE PATENTSCHRIFT

(11) **EP 3 625 114 B1**
(45) Veröffentlichungstag und Bekanntmachung des Hinweises auf die Patenterteilung: **30.03.2022**
(21) Anmeldenummer: 18722966.1
(22) Anmeldetag: 04.05.2018
(51) Int. Cl.: B62D 53/00, B62D 59/04

(54) **ROUTENZUGANHÄNGER FÜR EINEN ROUTENZUG**
ROUTE TRAIN TRAILER FOR A ROUTE TRAIN
REMORQUE POUR CHARIOT REMORQUEUR

(30) Priorität: 18.05.2017 DE 102017110862
(43) Veröffentlichungstag der Anmeldung: 25.03.2020
(73) Patentinhaber: LR Intralogistik GmbH, 84109 Wörth a. d. Isar (DE)
(72) Erfinder: BERGHAMMER, Fritz, 84028 Landshut (DE)
(74) Vertreter: Patentship Patentanwaltgesellschaft
(86) Internationale Anmeldenummer: PCT/EP2018/061458
(87) Internationale Veröffentlichungsnummer: WO 2018/210582

(56) Entgegenhaltungen:
- EP-A1- 3 290 305
- WO-A1-2016/161216
- CN-A- 105 620 514
- DE-A1- 10 131 935
- US-A1- 2011 253 463

## Beschreibung

Die Erfindung betrifft einen Routenzuganhänger für einen Routenzug, wobei der Routenzuganhänger ein Fahrwerk mit mindestens einem Rad aufweist, wobei das Rad mit einem elektrischen Fahrantriebsmotor in trieblicher Verbindung steht und der elektrische Fahrantriebsmotor von einer elektronischen Steuereinrichtung gesteuert ist.

Für den innerbetrieblichen Transport von Lasten, beispielsweise im Produktionsbereich von Produktionsbetrieben, kommen zunehmend Routenzüge zum Einsatz, die aus einem Zugfahrzeug, beispielsweise einem Schlepper, und einer Mehrzahl von Routenzuganhängern bestehen, auf den die Lasten transportiert werden.

Die Routenzuganhänger sind hierbei untereinander und mit dem Zugfahrzeug mit entsprechenden Deichseln verbunden.

Bei bekannten Routenzuganhängern sind die Räder des Fahrwerks als nicht-angetriebene und somit mitlaufende Räder ausgebildet. Die Zugkraft zum Fahren des Routenzuganhängers und die Bremskraft zum Bremsen des Routenzuganhängers wird somit von dem Zugfahrzeug aufgebracht. Sofern ein Routenzug mehrere Routenzuganhänger aufweist, muss das Zugfahrzeug eine entsprechend hohe Zugkraft bzw. Bremskraft aufweisen. Die Zugkraft bzw. Bremskraft und somit die Größe des Zugfahrzeugs nimmt somit proportional zu der Beladelast des Routenzugs bzw. der Anzahl der Routenzuganhänger zu. Je höher die Beladelast des Routenzuges ist, desto größer muss die Zugkraft bzw. Bremskraft des Zugfahrzeugs sein.

Zudem werden bei bekannten Routenzuganhängern, bei denen die Räder des Fahrwerks als nicht-angetriebene und somit mitlaufende Räder ausgebildet sind, die Zugkraft zum Fahren des Routenzuganhängers und die Bremskraft zum Bremsen des Routenzuganhängers über die Deichsel sowie über die Routenzuganhänger übertragen. Bei einem Routenzug mit mehreren Routenzuganhängern wird somit von der Stabilität der Deichseln und der Stabilität der Routenzuganhänger auch die Zuglänge, d.h. die Anzahl der aneinander angehängten Routenzuganhänger, beschränkt, denn je länger der Routenzug ist, d.h. je mehr Routenzuganhänger aneinander gekoppelt sind, desto größere Kräfte wirken auf die Deichseln und die Routenzuganhänger.

Die DE 101 31 935 A1 offenbart einen Sattelschlepper-Wagenzug, bei dem der Sattelschlepper und die Anhänger jeweils ein Antriebssystem, beispielsweise einen Elektromotor, aufweisen. Das Antriebssystem des Anhängers ist in Abhängigkeit von einem Anforderungssignal und eines Lastsignals angesteuert. Das Anforderungssignal wird von einem Eingabegerät, beispielsweise einem Gaspedal des Zugfahrzeugs erzeugt, und kann eine Beschleunigungsrate, d.h. die Beschleunigung des Zugfahrzeugs, sein. Das Lastsignal wird von einem Lastsensor erfasst, der die Zuglast in den Gelenkverbindungen (Aufsattelkupplung oder Deichsel) der Anhänger erfasst. Eine Steuervorrichtung, die bevorzugt zentral in der Zugmaschine angeordnet ist, steht mit den Lastsensoren in Verbindung und erfasst das Anforderungssignal und steuert die Antriebssysteme der Anhänger in Abhängigkeit von dem Anforderungssignal des Gaspedals der Zugmaschine und modifiziert diese Ansteuerung in Abhängigkeit von dem Signal des Lastsensors, um ein Einknicken des Zugs zu verhindern.

Die WO 2016/161216 A1 offenbart ein System, bei dem mehrere Fahrzeuge zu einem Fahrzeug-Zug zusammengekuppelt sind. Zwischen den Fahrzeugen ist eine Master-Slave-Verbindung vorgesehen, bei der das vorderste Fahrzeug die hinteren Fahrzeuge steuert und hierzu von dem vordersten Fahrzeug entsprechenden Ansteuersignale über Kupplungen an einen Fahrantrieb und ein Bremssystem der hinteren Fahrzeuge geführt werden.

Die US 2011/0253463 A1 offenbart ein System, bei dem mehrere Elektrofahrzeuge zusammengeschaltet und mit einem elektrischen Energiemodul gekuppelt werden. Die Geschwindigkeit, Beschleunigung und Abbremsen der hinteren Fahrzeuge wird mit dem vordersten Fahrzeug synchronisiert, wozu über Kupplungen zwischen den Fahrzeugen entsprechende Signalleitungen laufen.

Die nachveröffentlichte EP 3 290 305 A1 offenbart einen Sattelschlepper-Wagenzug, bei dem eine Zugmaschine eine Antriebsachse und der Anhänger/Auflieger mindestens eine Antriebsachse aufweisen. Die Antriebsachse des Anhängers/Aufliegers wird in Abhängigkeit von dem ermittelten Fahrbetriebszustand und dem ermittelten Antriebsbedarf des Wagenzugs automatisch angesteuert.

Die CN 105 620 514 A offenbart, mehrere Fahrzeuge zu einem "virtuellen Zug" zu koppeln und die Lenkantriebe der Fahrzeuge so zu steuern, dass die hinteren Fahrzeuge der Bahn des vorderen Fahrzeugs folgen.

Der vorliegenden Erfindung liegt die Aufgabe zugrunde, einen Routenzuganhänger der eingangs genannten Gattung zur Verfügung zu stellen, bei dem die oben genannten Nachteile vermieden sind.

Diese Aufgabe wird erfindungsgemäß dadurch gelöst, dass die elektronische Steuereinrichtung den Fahrantriebsmotor in Abhängigkeit von einem auf den Routenzuganhänger einwirkenden Beschleunigungsimpuls und/oder Verzögerungsimpuls ansteuert. Die Räder des Routenzuganhängers sind somit als mittels eines elektrischen Fahrantriebsmotors angetriebene Räder ausgebildet. Die elektronische Steuereinrichtung steuert hierbei den Fahrantriebsmotor in Abhängigkeit von einem auf den Routenzuganhänger einwirkenden Beschleunigungsimpuls und/oder Verzögerungsimpuls, wobei der Beschleunigungsimpuls und/oder der Verzögerungsimpuls von dem Zugfahrzeug erzeugt wird, an das der Routenzuganhänger angehängt ist. Sofern von der elektronischen Steuereinrichtung ein auf den Routenzuganhänger einwirkender Beschleunigungsimpuls erfasst wird, steuert die elektronische Steuereinrichtung den Fahrantriebsmotor derart an, dass das Rad selbstständig fährt und synchron mit dem Zugfahrzeug beschleunigt und fährt. Das Rad des Routenzuganhängers weist somit dieselbe Beschleunigung und/oder Geschwindigkeit wie die Zugfahrzeug auf. Sofern von der elektronischen Steuereinrichtung ein auf den Routenzuganhänger einwirkender Verzögerungsimpuls erfasst wird, steuert die elektronische Steuereinrichtung den Fahrantriebsmotor derart an, dass das Rad selbstständig abbremst und synchron mit dem Zugfahrzeug verzögert bzw. abbremst. Dadurch ergeben sich als Vorteile, dass die Zugkraft zum Fahren des Routenzuganhängers und die Bremskraft zum Bremsen des Routenzuganhängers von dem Fahrantriebsmotor des Routenzuganhängers selbst aufgebracht wird. Sofern ein Routenzug mehrere Routenzuganhängern aufweist, ist somit die Zugkraft bzw. Bremskraft und somit die Größe des Zugfahrzeugs nicht mehr abhängig von der Beladelast des Routenzugs bzw. der Anzahl der Routenzuganhänger. Mit den erfindungsgemäßen Routenzuganhängern kann somit ein Routenzug mit einer hohen Anzahl von Routenzuganhängern bzw. mit einer hohen Beladelast mit einem kleinen Zugfahrzeug betrieben werden, da das Zugfahrzeug nur noch die Fahrtrichtung vorgeben muss und sich selbst bewegen muss sowie den entsprechenden auf den Routenzuganhänger einwirkenden Beschleunigungsimpuls und/oder Verzögerungsimpuls erzeugen muss, jedoch nicht mehr die Zugkräfte und Bremskräfte für die Routenzuganhänger aufbringen muss. Mit den erfindungsgemäßen Routenzuganhängern wird somit auch ermöglicht, dass handelsübliche fahrerlose Transportsysteme oder fahrerlose Transportfahrzeuge, sogenannte FTS, als Zugfahrzeug eines Routenzugs verwendet werden können, die einen oder mehreren erfindungsgemäße Routenzuganhänger aufweisen.

Zudem werden bei den erfindungsgemäßen Routenzuganhänger, bei dem die Räder des Fahrwerks als angetriebene Räder ausgebildet sind, die Zugkraft zum Fahren des Routenzuganhängers und die Bremskraft zum Bremsen des Routenzuganhängers nicht mehr über die Deichsel sowie über die Routenzuganhänger übertragen. Mit den von dem Fahrantriebsmotor angetriebenen Rädern des Routenzuganhängers wird somit erzielt, dass die Deichseln von den Zugkräften und Bremskräften entlastet sind. Bei einem Routenzug mit mehreren erfindungsgemäßen Routenzuganhängern wird somit nicht mehr von der Stabilität der Deichseln und der Stabilität der Routenzuganhänger die Zuglänge, d.h. die Anzahl der aneinander angehängten Routenzuganhänger, beschränkt.

Gemäß einer vorteilhaften Ausführungsform der Erfindung steht die elektronischen Steuereinrichtung mit einer Sensoreinrichtung in Wirkverbindung, die den auf den Routenzuganhänger einwirkenden Beschleunigungsimpuls und/oder Verzögerungsimpuls erfasst.

Die Sensoreinrichtung ist gemäß einer vorteilhaften Ausgestaltungsform der Erfindung als Beschleunigungssensor ausgebildet, der als Beschleunigungsimpuls bzw. Verzögerungsimpuls die auf den Routenzuganhänger einwirkende Beschleunigung in horizontaler Fahrtrichtung erfasst.

Besondere Vorteile ergeben sich, wenn gemäß einer Weiterbildung der Erfindung das Rad mit dem elektrischen Fahrantriebsmotor, der elektronischen Steuereinrichtung und der Sensoreinrichtung versehen ist. Das angetriebene Rad kann somit auf einfache Weise anstelle eines rein mitlaufenden Rades an dem Routenzuganhänger angeordnet werden.

Vorteilhafterweise ist der elektrische Fahrantriebsmotor als Radnabenmotor ausgebildet. Das Rad weist somit einen integrierten Fahrantriebsmotor und somit einen integrierten Antrieb auf. Das mit dem Radnabenmotor ausgestattete Rad weist somit einen geringen Bauraumbedarf auf und kann auf einfache Weise an bestehenden Routenzuganhängern angebaut werden.

Vorteilhafterweise ist das Rad mit einer Batterie zur Versorgung des elektrischen Fahrantriebsmotors versehen. Das Rad ist somit mit dem elektrischen Fahrantriebsmotor, der elektronischen Steuereinrichtung, der Sensoreinrichtung und der Batterie zur Versorgung des elektrischen Fahrantriebsmotors versehen, so dass das Rad alle Komponenten für den Fahrbetrieb und Bremsbetrieb aufweist.

Alternativ oder zusätzlich kann der Routenzuganhänger mit einer Batterie zur Versorgung des elektrischen Fahrantriebsmotors des Rades versehen sein.

Die Erfindung betrifft weiterhin ein Transportsystem umfassend ein Zugfahrzeug und mindestens einen an das Zugfahrzeug angekoppelten erfindungsgemäßen Routenzuganhänger. Ein derartiges Transportsystem weist die Vorteile auf, dass die Zugkraft zum Fahren der Routenzuganhänger und die Bremskraft zum Bremsen der Routenzuganhänger von den entsprechenden Fahrantriebsmotoren der Räder der Routenzuganhänger selbst aufgebracht wird. Sofern ein Routenzug mehrere Routenzuganhängern aufweist, ist somit die Zugkraft bzw. Bremskraft und somit die Größe des Zugfahrzeugs nicht mehr abhängig von der Beladelast des Routenzugs bzw. der Anzahl der Routenzuganhänger. Bei dem erfindungsgemäßen Transportsystem kann somit ein Routenzug mit einer hohen Anzahl von Routenzuganhängern bzw. mit einer hohen Beladelast mit einem kleinen Zugfahrzeug betrieben werden, da das Zugfahrzeug nur noch die Fahrtrichtung vorgeben muss und sich selbst bewegen muss sowie den entsprechenden auf den Routenzuganhänger einwirkenden Beschleunigungsimpuls und/oder Verzögerungsimpuls erzeugen muss, jedoch nicht mehr die Zugkräfte und Bremskräfte für die Routenzuganhänger aufbringen muss. Zudem werden bei dem erfindungsgemäßen Transportsystem die Zugkräfte zum Fahren der Routenzuganhänger und die Bremskräfte zum Bremsen der Routenzuganhänger nicht mehr über die Deichsel sowie über die Routenzuganhänger übertragen, so dass die Deichseln von den Zugkräften und Bremskräften entlastet sind. Vorteilhafterweise ist das Zugfahrzeug mit einer Batterie zur Versorgung des elektrischen Fahrantriebsmotors des Rades versehen.

Die Batterie des Zugfahrzeugs kann hierbei als Traktionsbatterie des Zugfahrzeugs ausgebildet sein, das ein elektrisches Antriebssystem des Zugfahrzeugs mit elektrischer Energie versorgt.

Weitere Vorteile und Einzelheiten der Erfindung werden anhand der in den schematischen Figuren dargestellten Ausführungsbeispiele näher erläutert. Hierbei zeigt
- Figur 1: ein Routenzug mit zwei erfindungsgemäßen Routenzuganhängern, die miteinander mittels einer Deichsel gekoppelt sind,
- Figur 2: eine weitere Ausführungsform eines erfindungsgemäßen Routenzuganhängers eines Routenzugs und
- Figur 3: ein erfindungsgemäßes Rad der Routenzuganhänger der Figur 1 bzw. der Figur 2.

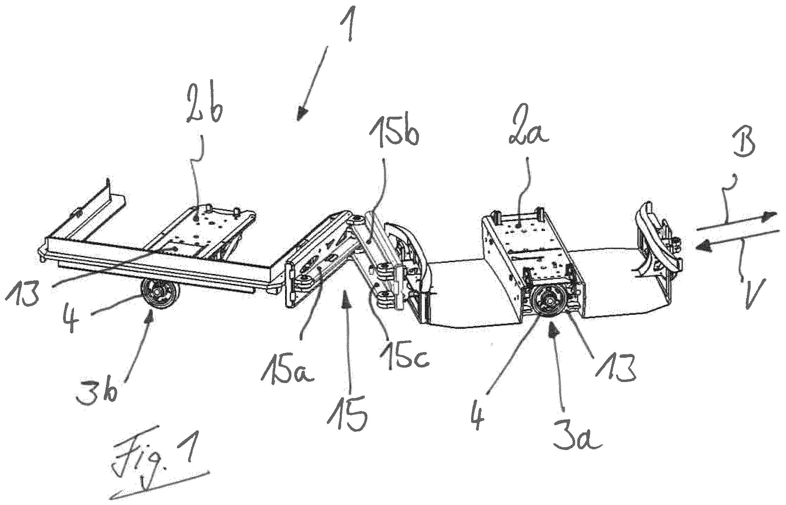

In der Figur 1 ist ein Routenzug 1 mit zwei erfindungsgemäßen Routenzuganhängern 2a, 2b in einer perspektivischen Darstellung dargestellt.

Die beiden Routenzuganhänger 2a, 2b weisen jeweils ein Fahrwerk 3a, 3b auf, mit dem der entsprechenden Routenzuganhänger 2a, 2b auf einer Fahrbahnoberfläche läuft. Die Fahrwerke 3a, 3b weisen jeweils mindestens ein Rad 4 auf.

Die beiden Routenzuganhänger 2a, 2b sind mittels einer Deichsel 15 miteinander verbunden.

Die Deichsel 15 ist im dargestellten Ausführungsbeispiel der Figur 1 von zumindest zwei bzw. drei sich kreuzenden Deichsellenkern 15a, 15b, 15c gebildet. Die Erfindung ist jedoch nicht auf diese Ausführungsform einer Deichsel 15 beschränkt.

In dem dargestellten Ausführungsbeispiel der Routenzuganhänger 2a, 2b gemäß der Figur 1 sind die Räder 4 als nicht-gelenkte Räder ausgebildet. Die Fahrwerke 3a, 3b sind in Längsrichtung der Routenzuganhänger 2a, 2b jeweils im Wesentlichen mittig angeordnet.

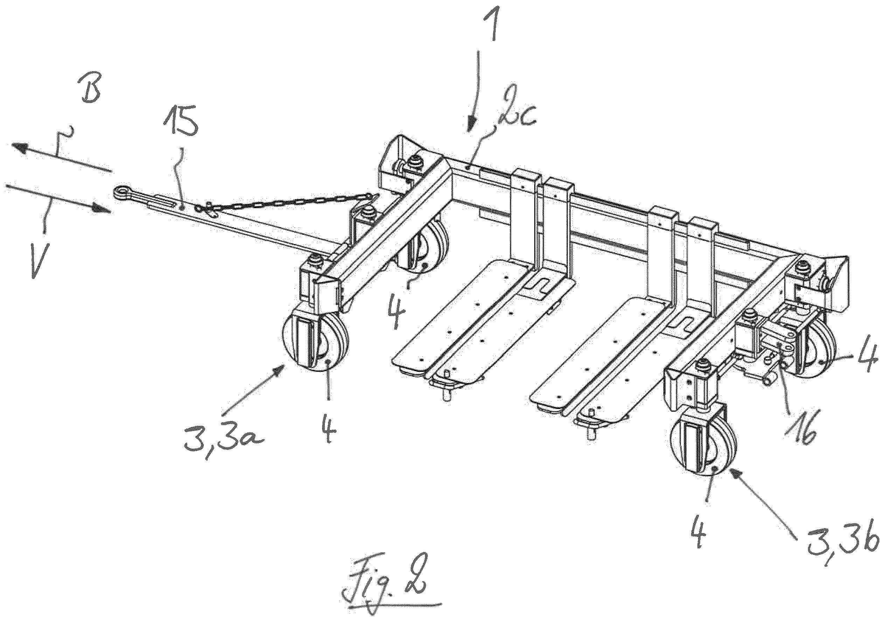

In der Figur 2 ist eine weitere Ausführungsform eines erfindungsgemäßen Routenzuganhängers 2c eines Routenzugs 1 dargestellt.

Der Routenzuganhänger 2c gemäß der Figur 2 weist ein Fahrwerk 3 auf, das aus einem Vorderfahrwerk 3a und einem Hinterfahrwerk 3c besteht, mit dem der Routenzuganhänger 2c auf einer Fahrbahnoberfläche läuft. Das Vorderfahrwerk 3a und das Hinterfahrwerk 3c weisen jeweils zwei Räder 4 auf. Die Räder 4 des Vorderfahrwerks 3a und/oder die Räder 4 des Hinterfahrwerks 3c können jeweils als lenkbare Räder ausgebildet sein.

Der Routenzuganhänger 2c der Figur 2 weist zur Verbindung mit einem vorausfahrenden Schlepper bzw. einem vorausfahrenden Routenzuganhänger vorne eine Deichsel 15 auf. Der Routenzuganhänger 2c der Figur 2 weist zur Verbindung mit einem hinterherlaufenden Routenzuganhänger hinten eine Anhängerkupplung 16 auf.

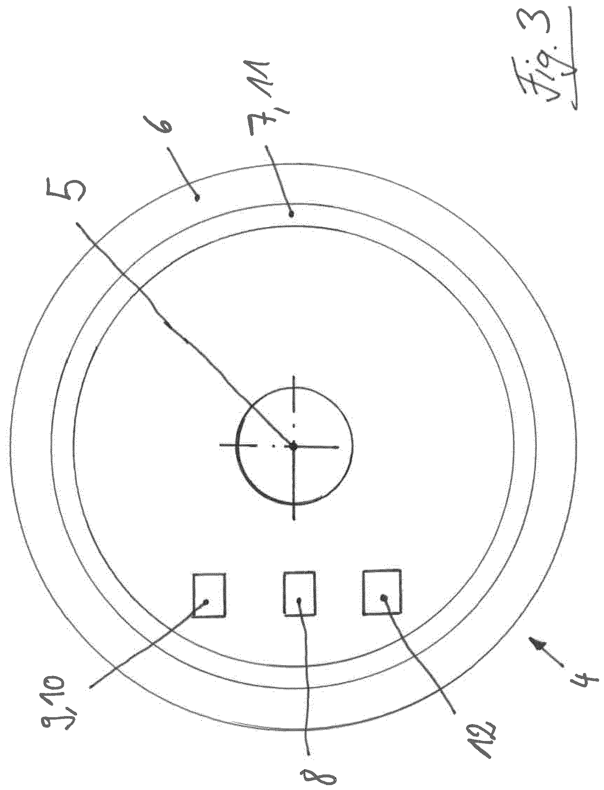

In der Figur 3 ist ein Rad 4 der Routenzuganhänger 2a, 2b der Figur 1 bzw. des Routenzuganhängers 2c der Figur 2 in einer schematischen Darstellung dargestellt.

Das Rad 4 weist eine um eine Drehachse 5 drehbar angeordnete Radnabe 6 auf, die mit einem elektrischen Fahrantriebsmotor 7 in trieblicher Verbindung steht und von diesem angetrieben ist. Der elektrische Fahrantriebsmotor 7 ist von einer elektronischen Steuereinrichtung 8 gesteuert, die den Fahrantriebsmotor 7 in Abhängigkeit von einem auf den Routenzuganhänger 2a bzw. 2b bzw. 2c einwirkenden Beschleunigungsimpuls B und/oder Verzögerungsimpuls V ansteuert, der von einem in der Figur 1 nicht näher dargestellten Zugfahrzeug auf den Routenzuganhänger 2a bzw. 2b bzw. 2c ausgeübt wird.

Die elektronische Steuereinrichtung 8 steht hierzu mit einer Sensoreinrichtung 9 in Wirkverbindung, die den auf den Routenzuganhänger 2a bzw. 2b bzw. 2c einwirkenden Beschleunigungsimpuls B und/oder Verzögerungsimpuls V erfasst.

Die Sensoreinrichtung 9 kann beispielsweise als Beschleunigungssensor 10 ausgebildet sein, der die auf den Routenzuganhänger 2a bzw. 2b bzw. 2c einwirkende Beschleunigung in horizontaler Fahrtrichtung erfasst.

Das Rad 4 ist bevorzugt mit dem elektrischen Fahrantriebsmotor 7, der elektronischen Steuereinrichtung 8 und der Sensoreinrichtung 9 versehen.

Der elektrische Fahrantriebsmotor 7 ist hierzu bevorzugt als Radnabenmotor 11 ausgebildet, der in das Rad 4 eingebaut ist.

Weiterhin kann das Rad 4 mit einer Batterie 12 zur Versorgung des elektrischen Fahrantriebsmotors 7 versehen sein.

Alternativ oder zusätzlich kann der Routenzuganhänger 2a, 2b bzw. 2c mit einer Batterie 13 zur Versorgung des elektrischen Fahrantriebsmotors 7 des Rades 4 versehen sein.

In der Figur 1 und der Figur 2 nicht näher dargestellt ist ein Zugfahrzeug, an das die Routenzuganhänger 2a, 2b bzw. 2c angehängt sind. Alternativ oder zusätzlich kann das Zugfahrzeug mit einer Batterie zur Versorgung des elektrischen Fahrantriebsmotors 7 des Rades 4 versehen sein.

Die elektronische Steuereinrichtung 8 ist derart ausgebildet, dass bei einem auf den Routenzuganhänger 2a bzw. 2b bzw. 2c einwirkenden Beschleunigungsimpuls B und/oder Verzögerungsimpuls V der Beschleunigungsimpuls B und/oder Verzögerungsimpuls V zu Null ausgeregelt wird, so dass das Rad 4 entsprechend der Beschleunigung und/oder Geschwindigkeit des Zugfahrzeugs mitfährt, so dass der Routenzuganhänger 2a bzw. 2b bzw. 2c dieselbe Geschwindigkeit wie das Zugfahrzeug aufweist.

Die mit dem erfindungsgemäßen Rad 4 ausgestatteten Routenzuganhänger 2a bzw. 2b bzw. 2c ermöglichen eine Reihe von Vorteilen:
Durch die mit dem Fahrantriebsmotor 7 ausgestatteten Räder 4 der Routenzuganhänger 2a, 2b, 2c kann in einem Routenzug die Zugkraft des Zugfahrzeugs stark reduziert werden. Mit den erfindungsgemäßen Routenzuganhängern 2a, 2b, 2c kann somit ein Routenzug mit einer hohen Anzahl von Routenzuganhängern 2a, 2b, 2c bzw. mit einer hohen Beladelast mit einem kleinen Zugfahrzeug betrieben werden, da das Zugfahrzeug nur noch die Fahrtrichtung vorgeben muss und sich selbst bewegen muss sowie den entsprechenden auf den Routenzuganhänger 2a, 2b, 2c einwirkenden Beschleunigungsimpuls B und/oder Verzögerungsimpuls V erzeugen muss, jedoch nicht mehr die Zugkräfte und/oder Bremskräfte für die Routenzuganhänger 2a, 2b, 2c aufbringen muss, da diese von den mit den Fahrantriebsmotoren 7 ausgestatten Rädern 4 selbst erzeigt werden.

Zudem werden bei den erfindungsgemäßen Routenzuganhänger 2a, 2b, 2c die Zugkräfte zum Fahren der Routenzuganhänger 2a, 2b, 2c nicht mehr über die Deichseln 15 sowie über die Routenzuganhänger 2a, 2b, 2c übertragen. Mit den von dem entsprechenden Fahrantriebsmotor 7 angetriebenen Rädern 4 der Routenzuganhänger 2a, 2b, 2c wird somit erzielt, dass die Deichseln 15 von den Zugkräften entlastet sind.

Die erfindungsgemäßen Routenzuganhänger 2a, 2b, 2c ermöglichen es, längere Routenzüge mit einer hohen Anzahl von Routenzuganhänger 2a, 2b, 2c zusammenzustellen.

Weiterhin ergibt sich mit den erfindungsgemäßen Routenzuganhänger 2a, 2b, 2c ein verbessertes Bremsverhalten eines Routenzuges 1 mit einem punktgenauen Abbremsen des Routenzuges 1 sowie ein verbessertes Anfahrverhalten und Bremsverhalten an Rampen bzw. Steigungen, da jeder Routenzuganhänger 2a, 2b, 2c durch die mit den Fahrantriebsmotoren 7 versehene Räder 4 für sich selbst beschleunigt und abbremst.

## Patentansprüche

1. Routenzuganhänger (2a; 2b; 2c) für einen Routenzug (1), wobei der Routenzuganhänger (2a; 2b; 2c) ein Fahrwerk (3; 3a, 3b) mit mindestens einem Rad (4) aufweist, wobei das Rad (4) mit einem elektrischen Fahrantriebsmotor (7) in trieblicher Verbindung steht und der elektrische Fahrantriebsmotor (7) von einer elektronischen Steuereinrichtung (8) gesteuert ist, **dadurch gekennzeichnet, dass** die elektronische Steuereinrichtung (8) den Fahrantriebsmotor (7) in Abhängigkeit von einem auf den Routenzuganhänger (2a; 2b; 2c) einwirkenden Beschleunigungsimpuls (B) und/oder Verzögerungsimpuls (V) ansteuert.

2. Routenzuganhänger nach Anspruch 1, **dadurch gekennzeichnet, dass** die elektronischen Steuereinrichtung (8) mit einer Sensoreinrichtung (9) in Wirkverbindung steht, die den auf den Routenzuganhänger (2a; 2b; 2c) einwirkenden Beschleunigungsimpuls (B) und/oder Verzögerungsimpuls (V) erfasst.

3. Routenzuganhänger nach Anspruch 1 oder 2, **dadurch gekennzeichnet, dass** die Sensoreinrichtung (9) als Beschleunigungssensor (10) ausgebildet ist.

4. Routenzuganhänger nach einem der Ansprüche 1 bis 3, **dadurch gekennzeichnet, dass** das Rad (4) mit dem elektrischen Fahrantriebsmotor (7), der elektronischen Steuereinrichtung (8) und der Sensoreinrichtung (9) versehen ist.

5. Routenzuganhänger nach einem der Ansprüche 1 bis 4, **dadurch gekennzeichnet, dass** der elektrische Fahrantriebsmotor (7) als Radnabenmotor ausgebildet ist.

6. Routenzuganhänger nach einem der Ansprüche 1 bis 5, **dadurch gekennzeichnet, dass** das Rad (4) mit einer Batterie (12) zur Versorgung des elektrischen Fahrantriebsmotor (7) versehen ist.

7. Routenzuganhänger nach einem der Ansprüche 1 bis 6, **dadurch gekennzeichnet, dass** der Routenzuganhänger (2a; 2b; 2c) mit einer Batterie (13) zur Versorgung des elektrischen Fahrantriebsmotors (7) des Rades (4) versehen ist.

8. Transportsystem umfassend ein Zugfahrzeug und mindestens einen an das Zugfahrzeug angekoppelten Routenzuganhänger (2a; 2b; 2c) nach einem der vorangegangenen Ansprüche.

9. Transportsystem nach Anspruch 8, **dadurch gekennzeichnet, dass** das Zugfahrzeug mit einer Batterie zur Versorgung des elektrischen Fahrantriebsmotors (7) des Rades (4) versehen ist.

10. Transportsystem nach Anspruch 9, **dadurch gekennzeichnet, dass** die Batterie als Traktionsbatterie des Zugfahrzeugs ausgebildet ist.

## Claims

1. Tugger train trailer (2a; 2b; 2c) for a tugger train (1), wherein the tugger train trailer (2a; 2b; 2c) has a chassis (3; 3a, 3b) with at least one wheel (4), wherein the wheel (4) is connected in terms of drive to an electric drive motor (7) and the electric drive motor (7) is controlled by an electronic control device (8), **characterized in that** the electronic control device (8) actuates the drive motor (7) on the basis of an acceleration pulse (B) and/or braking pulse (V) acting on the tugger train trailer (2a; 2b; 2c).

2. Tugger train trailer according to Claim 1, **characterized in that** the electronic control device (8) is operatively connected to a sensor device (9) that detects the acceleration pulse (B) and/or braking pulse (V) acting on the tugger train trailer (2a; 2b; 2c).

3. Tugger train trailer according to Claim 1 or 2, **characterized in that** the sensor device (9) is in the form of an acceleration sensor (10).

4. Tugger train trailer according to one of Claims 1 to 3, **characterized in that** the wheel (4) is provided with the electric drive motor (7), the electronic control device (8) and the sensor device (9).

5. Tugger train trailer according to one of Claims 1 to 4, **characterized in that** the electric drive motor (7) is in the form of wheel hub motor.

6. Tugger train trailer according to one of Claims 1 to 5, **characterized in that** the wheel (4) is provided with a battery (12) for supplying power to the electric drive motor (7).

7. Tugger train trailer according to one of Claims 1 to 6, **characterized in that** the tugger train trailer (2a; 2b; 2c) is provided with a battery (13) for supplying power to the electric drive motor (7) of the wheel (4).

8. Transport system comprising a towing vehicle and at least one tugger train trailer (2a; 2b; 2c) according to one of the preceding claims coupled to the towing vehicle.

9. Transport system according to Claim 8, **characterized in that** the towing vehicle is provided with a battery for supplying power to the electric drive motor (7) of the wheel (4).

10. Transport system according to Claim 9, **characterized in that** the battery is in the form of a traction battery of the towing vehicle.

## Revendications

1. Remorque de chariot remorqueur (2a ; 2b ; 2c) pour un chariot remorqueur (1), la remorque de chariot remorqueur (2a ; 2b ; 2c) présentant un châssis (3 ; 3a, 3b) comprenant au moins une roue (4), la roue (4) étant en liaison d'entraînement avec un moteur d'entraînement électrique (7) et le moteur d'entraînement électrique (7) étant commandé par un dispositif de commande électronique (8), **caractérisée en ce que** le dispositif de commande électronique (8) commande le moteur d'entraînement (7) en fonction d'une impulsion d'accélération (B) et/ou d'une impulsion de décélération (V) agissant sur la remorque de chariot remorqueur (2a ; 2b ; 2c).

2. Remorque de chariot remorqueur selon la revendication 1, **caractérisée en ce que** le dispositif de commande électronique (8) est en liaison fonctionnelle avec un dispositif capteur (9), qui détecte l'impulsion d'accélération (B) et/ou l'impulsion de décélération (V) agissant sur la remorque de chariot remorqueur (2a ; 2b ; 2c).

3. Remorque de chariot remorqueur selon la revendication 1 ou 2, **caractérisée en ce que** le dispositif capteur (9) est configuré sous forme de capteur d'accélération (10).

4. Remorque de chariot remorqueur selon l'une quelconque des revendications 1 à 3, **caractérisée en ce que** la roue (4) est munie du moteur d'entraînement électrique (7), du dispositif de commande électronique (8) et du dispositif capteur (9).

5. Remorque de chariot remorqueur selon l'une quelconque des revendications 1 à 4, **caractérisée en ce que** le moteur d'entraînement électrique (7) est configuré sous forme de moteur de moyeu de roue.

6. Remorque de chariot remorqueur selon l'une quelconque des revendications 1 à 5, **caractérisée en ce que** la roue (4) est munie d'une batterie (12) pour l'alimentation du moteur d'entraînement électrique (7).

7. Remorque de chariot remorqueur selon l'une quelconque des revendications 1 à 6, **caractérisée en ce que** la remorque de chariot remorqueur (2a ; 2b ; 2c) est munie d'une batterie (13) pour l'alimentation du moteur d'entraînement électrique (7) de la roue (4).

8. Système de transport comprenant un véhicule tracteur et au moins une remorque de chariot remorqueur (2a ; 2b ; 2c) selon l'une des revendications précédentes couplée au véhicule tracteur.

9. Système de transport selon la revendication 8, **caractérisé en ce que** le véhicule tracteur est muni d'une batterie pour l'alimentation du moteur d'entraînement électrique (7) de la roue (4).

10. Système de transport selon la revendication 9, **caractérisé en ce que** la batterie est configurée sous forme de batterie de traction du véhicule tracteur.
